# EUROPEAN PATENT SPECIFICATION

(11) **EP 1 257 403 B1**
(45) Date of publication and mention of the grant of the patent: **16.06.2004**
(21) Application number: 00905767.0
(22) Date of filing: 24.01.2000
(51) Int. Cl.: B29C 45/00, B29C 45/03

(54) **APPARATUS FOR MOLDING WITH HOT MELT ADHESIVES**
GERAET ZUM GIESSEN VON HEISSKLEBERN
APPAREIL DE MOULAGE AVEC ADHESIFS THERMOFUSIBLES

(43) Date of publication of application: 20.11.2002
(73) Proprietor: The Cavist Corporation, Reno, NV 89511 (US)
(72) Inventor: CARLSON, Kurt, Reno, NV 89511 (US); HANSEN, Reimer, Reno, NV 89511 (US); WILHELM, Thilo, Reno, NV 89511 (US)
(74) Representative: Menges, Rolf, Dipl.-Ing.
(86) International application number: PCT/US2000/002047
(87) International publication number: WO 2001/053057

(56) References cited:
- EP-A- 0 718 234
- DE-A- 19 820 871
- US-A- 5 201 420
- US-A- 5 792 493
- US-A- 5 945 139
- CINCINNATI MILACRON, "Hydraulic Injection Molding Machinery", February 1984, pages 1-8, XP002927839.
- CINCINNATI MILACRON, "T-Line Toggle Injection Molding Machines", January 1982, pages 1-8, XP002927840.

## Description

**Field of invention.** This invention relates to an Premelt Polyamide molding apparatus, which is primarily used for insert molding. More specifically, it is directed to a molding apparatus for use with hot melt adhesives such as dimer acid based polyamide resins. Such raw materials can be used for molding at relatively low pressures, thus allowing encapsulation of fragile components.

**Background for the invention.** Molding machines for insert molding with hot melt adhesives are known. Most existing molding machines used for molding with hot melt adhesives utilize melting and feeding systems adapted from hot melt application equipment. They generally fall in two main categories namely small machines for prototype molding with small reservoir capacities below 500 ml and larger production machines with larger melt reservoirs above 2 liters. The prototype machines often use air pressure to push out the melted material and are typically designed with an injection nozzle that is fixed on the reservoir. Therefore the reservoir or the mold-set must move in order for the nozzle to engage into the mold-set. The production machines typically utilize a pumping device and a heated hose to transport the melted material to the nozzle. This nozzle is typically mounted on a sliding device, allowing it to engage into the mold-set. These molding machines typically utilize standard hot melt adhesive melting units combined with a mold clamp where a heated hose is used to transport the melted raw material to a sliding injection nozzle and finally to the mold set. Such machines are expensive to manufacture and require maintenance or replacement of the heated hoses on a frequent basis. These hoses are prone to blockage as the material chars inside. The hoses also limit the maximum molding temperatures with such Polyamide materials and are a source of substantial energy loss. Sometimes it is desirable to operate at temperatures above the hose limitation in order to obtain certain flow characteristics from the raw materials in the mold-set. Specifically the harder polyamide materials tend to have heat requirements above that of heated hoses.

**Summary of the invention.** Accordingly the objectives of this invention are to provide an apparatus for molding with Polyamide materials that:
provides a more cost effective molding machine for high volume production;
reduces the maintenance requirements for such machines;
reduces the energy loss typically associated with such molding equipment;
reduces cycle time for molding operations with a new injection nozzle engagement system;
reduces degradation of material due to short transfer distance and accurate temperature control;
provides a better work area for the operator, and
simplifies changeover from one type of material to another.
Other objectives of the invention will become apparent from time to time throughout the specification and claims as hereinafter related.

To achieve such improvements, this invention consists of a cost-effective injection molding apparatus for molding with hot melt adhesives and other Polyamide materials. It is manufactured from standard, inexpensive tubing components in a simple design, it has fewer moving parts than other molding machines. It is specifically designed to not require the use of temperature limiting heated hoses for transport of melted material. It does not require sliding injection nozzles for engagement into mold-set. instead it utilizes a very compact layout with a substantially fixed injection nozzle. These features result in very low maintenance requirement for the invention. It incorporates a large, self-draining melt reservoir with single-side mounting to allow for heat expansion and has very short material transfer distance from reservoir to mold-set. It can utilize permanent nozzle engagement into the mold-set to simplify molding operation and reduce cost further. It incorporates several safety features to protect operators against injuries and has a large work area around the mold-set.

**Brief description of drawings.** The manner in which these objectives and other desirable characteristics can be obtained are indicated in the following description and the attached drawings in which:
Fig. 1 is a general layout of the invention showing structural frame, melt reservoir, pump, mold halves and controller box.
Fig. 2 shows the injection nozzle engagement into mold-set.

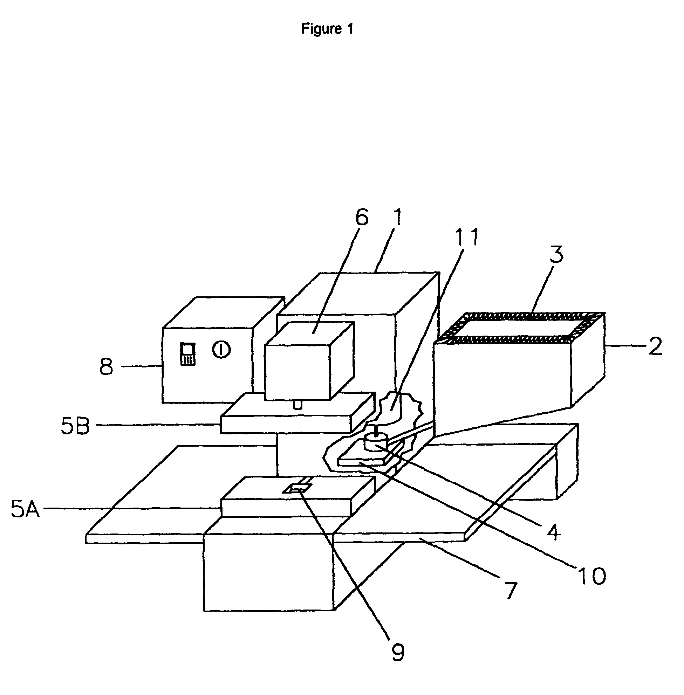

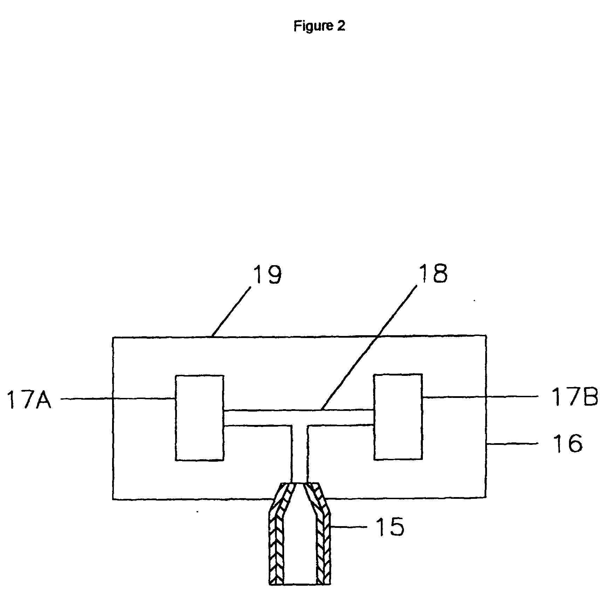

**Disclosure of the invention.** The preferred embodiment of the invention is illustrated in figs. 1 and 2. This molding apparatus for molding with Polyamide materials is designed for high productivity at low equipment and maintenance cost. It comprises a large melt reservoir (2) for full production scale molding operation without utilizing a heated hose to convey the molten material from the reservoir (2) to the mold-set (5A & 5B). Such heated hoses are prone to failure and thus costly to operate. Because of the relatively high viscosity and temperature of the melted raw materials, the energy losses in these hoses are substantial. The invention utilizes a compact layout where the injection nozzle (15) is mounted on a pump manifold (10) adjacent to the pump (4), preferably a gear pump, and where this pump (4) is mounted close to the melt reservoir (2). The melt reservoir (2) is designed to be self-draining for easier maintenance and is mounted in one side only to allow for expansion and contraction as result of temperature variations. Accurate temperature control (8) in different zones from the reservoir (2) to the injection nozzle (15) ensures correct temperature of the materials and thereby minimizes degradation. Such accurate temperature control can be achieved by utilizing several heating elements and temperature sensing devices that are located at various places at the melt reservoir (2) and pump manifold (10). The reservoir (2) is self-draining with easy cleaning access, which simplifies changeover from one type or color of raw material to another. A very short distance from the reservoir (2), where the raw materials are melted, to the mold-set (5A & 5B) simplifies the temperature management (8) and results in better performance from the raw materials. The physical properties of components (9 &17A & 17B) molded from polyamide resins are dependent on the molding temperature, which must be accurately controlled. In general these materials exhibit stronger adhesive properties when applied at temperatures in the higher end of their molding range. The present invention is designed to function without a heated hose and utilizes an adjustable injection nozzle (15), which can be mounted adjacent to the pump manifold (10). This allows higher molding temperatures as the hose is typically the temperature limitation on existing machines. The adjustable nozzle (15) is located close to the reservoir (2) to minimize degradation of the raw material and the nozzle (15) engagement into the mold-set (16 & 19) is fixed and requires no sliding of nozzle during molding operations. The nozzle (15) engagement is adjustable to allow for installation of different mold-sets (16 & 19) and is designed for easy mold-set (16 & 19) installation and to minimize heat loss during molding. This adjustment can be achieved by mounting the pump (4) and injection nozzle (15) in a manner that allows adjustment of nozzle location and by utilizing different types of nozzles. The invention has far fewer moving components than existing molding machines and therefore requires less maintenance. The invention utilizes a double "L" or "C" shaped frame (1), which provides for both structural rigidity to support the mold clamping device (6) and also for mounting of all apparatus main components. This can include the melt reservoir (2), the controller box (8), the work area (7) and the mold-set (5A & 5b). This frame (1) design utilizes inexpensive, standard tubing components that are readily available and can be sized to withstand the forces from the mold clamp. The pump (4) and motor (11) assembly can be mounted inside the main structural member resulting in a safe and compact molding apparatus for high production. This can be designed as a simple slide-in system. Another variation of the apparatus may have sliding lower mold halves (5A) that engages with the fixed injection nozzle (15), which makes it suitable for shuttle table or rotary table operation. Such arrangement will increase productivity further and offer additional space and work area (7) for the operator. Either design can be mounted on a bench-top, integrated into a workbench or mounted in a stand-alone frame. This cost effective molding apparatus is designed to allow for a clear and open work area (7) for the operator, which is important as insert molding often is used for cable assemblies. It incorporates various measures to protect the operator against burn and injury such as safety button systems, insulation (3) and heat shields. It is furthermore designed to be very quiet and clean and not require any hydraulic system for operation of any components. A pneumatically operated mold damping device (6) may incorporate features such as low initial force and only apply full pneumatic pressure when the mold-set (5A & 5B) is substantially closed to protect further against operator injury.

**Industrial applicability.** This simple insert molding apparatus will allow the industry to have a cost effective way to use hot melt adhesives for molding. This offers an alternative to forming components using toxic epoxy materials. The low molding pressures that can be used with these raw materials allow for over-molding or encapsulation of fragile components, such as electronic circuit boards or thin strands of wire. This simplifies the production of final parts and reduces the number of production steps in manufacturing operations. Molding with polyamide adhesives has technical as well as operator health advantages, as no toxic fumes are released, and this invention makes such low pressure molding a commercially competitive technology. Molding with such thermoplastic materials is known but the equipment available is rarely designed for this service but rather adapted from hot melt application equipment. This invention is an injection molding apparatus, which is designed specifically for molding at relatively low pressures with thermoplastic materials. The invention comprises a heated melt reservoir designed for melting of these molding materials and feeds the molten material into a mold-set via a pump and a special nozzle arrangement. The reservoir is designed for gradual and very efficient melting of the raw material. This is achieved by using construction materials of different heat transfer coefficients and thickness and by controlling the temperature in several zones. This minimizes degradation of material and conserves energy. The reservoir is designed to be self-draining and easy to clean. The nozzle engages into a portion of the mold-set. The injection nozzle is fixed. A substantially "L" or "C" shaped structure allows for easy access to molded components and locates the mold halves. The structure also may serve as housing for the injection pump and mounting of the reservoir.

Obviously, numerous (additional) modifications and variations of the present invention are possible in light of the above teachings. It is, therefore, to be understood that within the scope of the appended claims, the invention may be practiced otherwise than as specifically described herein.

## Claims

1. An apparatus for insert molding at relatively low pressures, comprising a frame (1), a melt reservoir (2) mounted on a side of the frame (1), and a pump (4) driven by a motor (11) and mounted close to the melt reservoir (2), wherein the pump (4) pumps hot melt material from the melt reservoir (2) to a fixed engagement nozzle (15) for injection of the hot melt material into a mold cavity, wherein the motor (11) is thermally insulated from the melt reservoir (2), and wherein the nozzle (15) is mounted directly and adjacent to the pump (4).

2. The apparatus according to claim 1, **characterized in that** the fixed engagement nozzle (15) is in a first mold section.

3. The apparatus according to claim 2, **characterized by** a second mold section that moves with respect to the first mold section.

4. The apparatus according to claim 3, **characterized by** at least two second mold sections and means for shuttling them into engagement with the first mold section.

5. The apparatus according to claim 3 or 4, **characterized by** clamping means for holding the mold sections together, and further by a lower initial clamping pressure and an elevated pressure to be engaged when the mold sections are substantially closed.

6. The apparatus according to any one of the claims 1 to 5, **characterized in that** the melt reservoir (2) comprises self-draining means.

7. The apparatus according to any one of the claims 1 to 6, **characterized in that** the nozzle engagement comprises a barrier in order to provide thermal insulation between the relatively hot nozzle (15) and a relatively cold mold set (5A, 5B; 16, 19).

8. The apparatus according to any one of the claims 1 to 7, **characterized in that** the pressures are limited to a range between 0,3447 x 10⁵ Pa and 34,474 x 10⁵ Pa.

9. The apparatus according to any one of the claims 1 to 8, **characterized in that** the hot melt material is a hot melt adhesive.

## Patentansprüche

1. Vorrichtung zum Zweistufen-Spritzgießen mit relativ niedrigen Drücken, mit einem Rahmen (1), einem Schmelzereservoir (2), das auf einer Seite des Rahmens (1) angebracht ist, mit einer durch den Motor (11) angetriebenen Pumpe (4), nahe bei dem Schmelzereseervoir (2) angebracht ist, wobei die Pumpe (4) Heißschmelzmaterial aus dem Schmelzereservoir (2) zu einer Festeingriffsdüse (15) pumpt zum Einspritzen des Heißschmelzmaterials in eine Formhöhlung, wobei der Motor (11) von dem Schmelzereservoir (2) thermisch isoliert ist und wobei die Düse (15) direkt an und benachbart zu der Pumpe (4) angebracht ist.

2. Vorrichtung nach Anspruch 1, **dadurch gekennzeichnet, dass** die Festeingriffsdüse (15) in einem ersten Formabschnitt ist.

3. Vorrichtung nach Anspruch 2, **gekennzeichnet durch** einen zweiten Formabschnitt, der sich in Bezug auf den ersten Formabschnitt bewegt.

4. Vorrichtung nach Anspruch 3, **gekennzeichnet durch** wenigstens zwei zweite Formabschnitte und **durch** eine Einrichtung zum Bewegen derselben, um sie in Eingriff mit dem ersten Formabschnitt zu bringen.

5. Vorrichtung nach Anspruch 3 oder 4, **gekennzeichnet durch** eine Klemmeinrichtung zum Zusammenhalten der Formabschnitte und weiter **durch** einen niedrigeren Anfangsklemmdruck und einen erhöhten Druck, der aufgebracht wird, wenn die Formabschnitte im Wesentlichen geschlossen sind.

6. Vorrichtung nach einem der Ansprüche 1 bis 5, **dadurch gekennzeichnet, dass** das Schmelzereservoir (2) eine Selbstentleereinrichtung aufweist.

7. Vorrichtung nach einem der Ansprüche 1 bis 6, **dadurch gekennzeichnet, dass** der Düseneingriff eine Barriere aufweist, um eine thermische Isolierung zwischen der relativ heißen Düse (15) und einem relativ kalten Formensatz (5A, 5B; 16, 19) bereitzustellen.

8. Vorrichtung nach einem der Ansprüche 1 bis 7, **dadurch gekennzeichnet, dass** die Drücke auf einen Bereich zwischen 0,3447 x 10⁵ Pa und 34,474 x 10⁵ Pa begrenzt sind.

9. Vorrichtung nach einem der Ansprüche 1 bis 8, **dadurch gekennzeichnet, dass** das Heißschmelzmaterial ein Schmelzkleber ist.

## Revendications

1. Dispositif pour le moulage d'insert sous des pressions relativement faibles, comprenant un châssis (1) ; un réservoir de fusion (2) monté sur un côté du châssis (1) et une pompe (4) entraînée par un moteur (11) et montée à proximité du réservoir de fusion (2) dans lequel la pompe (4) pompe du matériau thermofusible à partir du réservoir de fusion (2) vers une buse fixe (15) afin d'assurer l'injection du matériau thermofusible dans une cavité de moule, dans lequel le moteur (11) est isolé thermiquement du réservoir de fusion (2) et dans lequel l'injecteur (15) est monté directement sur la pompe (4) et de manière adjacente à celle-ci.

2. Dispositif selon la revendication 1, **caractérisé en ce que** la buse fixe (15) est disposée dans une première section de moule.

3. Dispositif selon la revendication 2, **caractérisé par** une seconde section de moule qui se déplace par rapport à la première section de moule.

4. Dispositif selon la revendication 3, **caractérisé par** au moins deux secondes sections de moule et un moyen d'acheminement destiné à les coupler avec la première section de moule.

5. Dispositif selon la revendication 3 ou 4, **caractérisé par** un moyen de blocage destiné à supporter les sections de moule entre elles et, en outre, par une pression de blocage initiale inférieure et une pression élevée à introduire lorsque les sections de moule sont sensiblement fermées.

6. Dispositif selon l'une quelconque des revendications 1 à 5, **caractérisé en ce que** le réservoir de fusion (2) comprend un moyen de drainage autonome.

7. Dispositif selon l'une quelconque des revendications 1 à 6, **caractérisé en ce que** le dispositif d'engagement de la buse comprend une barrière destinée à assurer une isolation thermique entre la buse relativement chaude (15) et un jeu de moules relativement froid (5A, 5B ; 16, 19).

8. Dispositif selon l'une quelconque des revendications 1 à 7, **caractérisé en ce que** les pressions sont limitées à une plage comprise entre 0,3447 x 10⁵ Pa et 34,474 x 10⁵ Pa.

9. Dispositif selon l'une quelconque des revendications 1 à 8, **caractérisé en ce que** le matériau thermofusible est un adhésif thermofusible.
